# EUROPÄISCHE PATENTSCHRIFT

(11) **EP 2 512 724 B1**
(45) Veröffentlichungstag und Bekanntmachung des Hinweises auf die Patenterteilung: **25.05.2016**
(21) Anmeldenummer: 10805689.6
(22) Anmeldetag: 16.12.2010
(51) Int. Cl.: B23K 26/24, F16H 63/30

(54) **GESCHWEISSTES SCHALTGESTÄNGE**
WELDED GEARSHIFT LINKAGE
TIMONERIE DE CHANGEMENT DE VITESSES SOUDÉE

(30) Priorität: 16.12.2009 DE 202009017006 U
(43) Veröffentlichungstag der Anmeldung: 24.10.2012
(73) Patentinhaber: Koki Technik Transmission Systems GmbH, 09399 Niederwürschnitz (DE)
(72) Erfinder: SCHULZE, Bernd, 09366 Niederdorf (DE); PREISER, Markus, 78467 Konstanz (DE)
(74) Vertreter: Patentanwälte und Rechtsanwalt Weiß, Arat & Partner mbB
(86) Internationale Anmeldenummer: PCT/EP2010/007664
(87) Internationale Veröffentlichungsnummer: WO 2011/082786

(56) Entgegenhaltungen:
- EP-A1- 2 379 916
- WO-A1-01/79728
- WO-A1-2004/079232
- WO-A1-2010/072287
- DE-A1- 10 032 163
- DE-A1- 10 202 651
- DE-A1-102005 010 269
- DE-A1-102006 038 524

## Beschreibung

Die Erfindung betrifft ein Schaltgestänge nach dem Oberbegriff des Anspruchs 1 und ein Verfahren zur Herstellung eines Schaltgestänges nach dem nebengeordneten Verfahrensanspruch.

### Stand der Technik

In diesem Zusammenhang wird auf die EP 2 379 916 A1 hingewiesen, die zum Stand der technik gemäß Artikel 54(3) EPÜ zählt welche ein Schaltgestänge offenbart, welches aus Draht hergestellt wurde.

Aus dem Stand der Technik sind Schaltgestänge bekannt, bei denen Schaltrohre und Schaltgabeln über Hülsen miteinander verbunden sind. Eine Möglichkeit, eine Hülse mit der Schaltgabel zu verbinden ist, die Hülse auf dem Schaltrohr mit Klemm-Verbindungen zu befestigen. Diese und andere bekannte Verbindungstechniken weisen den Nachteil auf, dass sie arbeitsintensiv sind und durch die zusätzlichen Bauteile auch teuer sind. Außerdem führen die zusätzlichen Bauteile zu zusätzlichem Gewicht, so dass die Schaltgestänge relativ schwer sind.

Bezüglich des Schaltrohres ist weiterhin darauf hinzuweisen, dass dadurch, dass in das Schaltrohr durch Fräsen Rastierkonturen eingebracht werden, die Schaltrohre vergleichsweise große Wandstärken aufweisen müssen, damit nach dem Einfräsen der Rastierkontur ausreichend Material vorhanden ist, um die Stabilität des Schaltrohres sicherzustellen. Auch dieser Umstand weist den Nachteil auf, dass das Schaltrohr vergleichsweise schwer ist, da es eine große Wandstärke benötigt.

In diesem Zusammenhang wird auf die WO 01/79728 A1 und die DE 100 32 163 A1 hingewiesen, welche ein Schaltgestänge mit einer Schaltgabel und einem Schaltrohr offenbaren, wobei das Schaltrohr mit der Schaltgabel verschweisst ist.

Weiter wird auf die DE 102 02 651 A1, DE 10 2005 010 269 A1 und die WO 2010/072287 A1 hingewiesen, welche ebenfalls ein Schaltgestänge offenbart nach dem Stand der Technik.

Zuletzt wird lediglich der Vollständigkeit halber auf die ebenfalls ein Schaltgestänge offenbarenden WO 2004/079232 A1 und DE 10 2006 038524 A1 hingewiesen.

### Offenbarung der Erfindung

Allgemein ist es Aufgabe der Erfindung, Schaltgestänge gegenüber dem Stand der Technik zu verbessern, insbesondere soll die Fertigung vereinfacht werden oder ein Schaltgestänge mit einem geringeren Gewicht geschaffen werden, wobei ebenso ein entsprechendes Herstellverfahren angegeben werden soll. Eine weitere Aufgabe der Erfindung ist es, eine verbesserte Getriebebetätigungsvorrichtung anzugeben, welche eine Mehrzahl von Schaltgestängen umfasst, wobei die Getriebebetätigungsvorrichtung gegenüber dem Stand der Technik insbesondere eine geringere Masse aufweisen soll und einfacher zu fertigen sein soll.

Die Aufgabe wird mit einem Schaltgestänge nach dem Anspruch 1 gelöst. Weitere Aspekte der Erfindung sind eine Getriebebetätigungsvorrichtung mit mindestens zwei erfindungsgemässen Schaltgestängen.

Ein erfindungsgemässes Schaltgestänge umfasst eine Schaltgabel und ein Schaltrohr, die mit einer Laserschweißung verschweißt sind. Besonders bevorzugt wird, dass die Schaltgabel unmittelbar an das Schaltrohr angeschweißt wird. Ein Aspekt der Erfindung betrifft die Verwendung von Draht für die Schaltgabel. Dies bietet weitere Gewichtsvorteile. Vorzugsweise sind mindestens 70% der Länge oder des Gewichts der Schaltgabel aus Draht, noch bevorzugter mindestens 85% oder die gesamte Schaltgabel, in diesem Fall ausgenommen eventuell angeordneter Kunststoff-Pads.

Vorteilhafterweise ist die Schaltgabel zumindest teilweise aus Blech, Guss oder Draht geformt. Dabei bedeutet teilweise, dass zumindest ein Großteil, d.h. mehr als die Hälfte des Gewichts oder der Länge der Schaltgabel aus den genannten Materialien geformt ist. Besonders bevorzugt ist die gesamte Schaltgabel aus einem der genannten Materialien gefertigt. Gesamt bedeutet dabei vorzugsweise mit Ausnahme von Anbauteilen, wie beispielsweise Kunststoff-Pads. Blech bietet den Vorteil, dass es billig ist, Guss ist auch bei schwierigen Formvorgaben verwendbar und Draht ist besonders leicht.

Die Erfindung hat den Vorteil, dass gegenüber herkömmlichen Lösungen Gewicht eingespart wird und ausserdem Teile und Arbeitsschritte eingespart werden. Auf diese Weise ist es möglich, das Schaltgestänge schneller, billiger und einfacher herzustellen. Außerdem ist das Schaltgestänge robuster, da es weniger Teile aufweist.

Bevorzugte Ausführungsformen der Erfindung weisen eine Schweißnaht zwischen der Schaltgabel und dem Schaltrohr auf, die mit einem Laser erzeugt wurde. Die Laserschweißung bietet den Vorteil, dass sie besonders exakt und in der automatischen Fertigung einfach produzierbar ist. Weiterhin ist bei Laserschweißen gegenüber MAG-Schweißen der Verzug geringer, so dass der Richtaufwand zur Sicherstellung der Toleranzen reduziert wird. Außerdem werden für MAG-Schweißen dickere Wandstärken benötigt.

Vorteilhafterweise weist das Schaltrohr zumindest eine rundgeknetete Rastierkontur auf. Besonders bevorzugt wird, falls alle Rastierkonturen des Schaltrohres rundgeknetet sind. Rundkneten bietet als spanlose Verformung den Vorteil, dass kein zusätzliches Wandmaterial vorgehalten werden muss, welches zur Herstellung der Rastierkontur wieder teilweise ausgefräst wird. Weiterhin wird die Bearbeitungszeit gegenüber einem Einfräsen der Rastierkontur verringert. Ausserdem werden die Steifigkeit und die Festigkeit des Schaltrohres nicht durch Ausfräsen von Material beeinträchtigt. Weiterhin entfällt das Sammeln und Entsorgen der Späne, wodurch weitere Kosten eingespart werden können.

Besondere Vorteile bietet das Rundkneten der Rastierkontur in Kombination mit dem Schweißen der Verbindung der Schaltgabel und des Schaltrohres, da auf diese Weise ein besonders leichtes Schaltgestänge geschaffen wird.

Vorzugsweise weist das Schaltrohr eine Wandstärke von maximal 3 mm, bevorzugter 2,5 mm, 2 mm oder noch bevorzugter von 1,6 mm auf. Es hat sich herausgestellt, dass durch Rundkneten der Rastierkontur die Wandstärke bis auf 1,5 mm reduziert werden kann, ohne dass die Funktionalität des Schaltrohres leidet.

Die Erfindung ist besonders geeignet für Schaltgestänge von HandSchaltungen oder automatisierten Handschaltungen oder von Doppelkupplungsgetrieben von Kraftfahrzeugen oder allgemein von Getrieben. Eine Getriebebetätigungsvorrichtung mit mindestens zwei Schaltgestängen in einer der oben beschriebenen, bevorzugten oder erfindungsgemässen Ausführungsformen bietet den Vorteil, dass diese Betätigungsvorrichtung besonders leicht ist und einfacher und kostengünstiger herzustellen ist.

Ein weiterer Aspekt der Erfindung betrifft ein Getriebe mit einer Mehrzahl von bevorzugten und erfindungsgemässen Schaltgestängen, besonders bevorzugt sind alle Schaltgestänge des Getriebes in einer der beschriebenen erfindungsgemässen oder bevorzugten Ausführungsformen. Ein solches Getriebe bietet den Vorteil, dass es besonders leicht ist.

Bevorzugte Getriebebetätigungsvorrichtungen weisen mindestens zwei Schaltgestänge auf, deren Schaltgabeln identisch sind. Dies bietet den Vorteil, dass bei der Fertigung weniger Teile benötigt werden. Besonders bevorzugt wird, falls die Getriebebetätigungsvorrichtung für ein Getriebe lediglich eine Sorte von Schaltgabeln aufweist, das heißt, dass die Getriebebetätigungsvorrichtung ausschließlich Schaltgestänge mit identischen Schaltgabeln aufweist.

Bevorzugte Ausführungsformen von Getrieben und Getriebebetätigungsvorrichtungen weisen zumindest zwei Schaltgestänge auf, welche identische Schaltrohre aufweisen. Besonders bevorzugt wird, falls an den identischen Schaltrohren identische Schaltgabeln an unterschiedlichen Positionen oder an denselben Positionen angeschweißt sind. Besonders bevorzugt wird das Anschweißen an unterschiedlichen Positionen, da bei Verwendung von identischen Schaltrohren und Schaltgabeln besonders wenig verschiedene Teile in der Fertigung hergestellt werden müssen, allerdings durch das Anschweißen einer unterschiedlichen Position dennoch unterschiedliche Schaltgestänge geschaffen werden können, und zwar auf einfache und kostengünstige Art und Weise.

Bei einem bevorzugten Verfahren wird zur Herstellung eines Schaltgestänges in einer der oben beschriebenen erfindungsgemässen oder bevorzugten Ausführungsformen die Schaltgabel unmittelbar an das Schaltrohr angeschweißt. Dies bietet den Vorteil, dass keine zusätzlichen Teile bei der Fertigung benötigt werden.

Vorteilhafterweise wird der Schritt des Anschweißens, also das Anschweißen der Schaltgabel an das Schaltrohr, unter Verwendung eines Laserschweißgerätes durchgeführt. Verfahrensmäßig wird bevorzugt, dass die Rastierkontur durch Rundkneten in das Schaltrohr eingearbeitet wird. Mit den beschriebenen Verfahrensschritten wird ein besonders leicht automatisierbares und schnell durchführbares und ausserdem zuverlässig wiederholbares Verfahren geschaffen, mit welchem Schaltgestänge mit geringem Gewicht geschaffen werden.

### Kurze Beschreibung der Zeichnungen

Nachfolgend werden bevorzugte Ausführungsbeispiele der Erfindung anhand der beiliegenden Zeichnungen eingehender beschrieben, wobei die Zeichnungen zeigen:
- Figur 1: eine schematische Ansicht eines erfindungsgemässen Schaltgestänges;
- Figur 2: eine schematische perspektivische Explosionsansicht des Schaltgestänges der Figur 1;
- Figur 3: eine erfindungsgemässe Getriebebetätigungsvorrichtung in einer schematischen, perspektivischen Ansicht.

### Beschreibung bevorzugter Ausführungsbeispiele

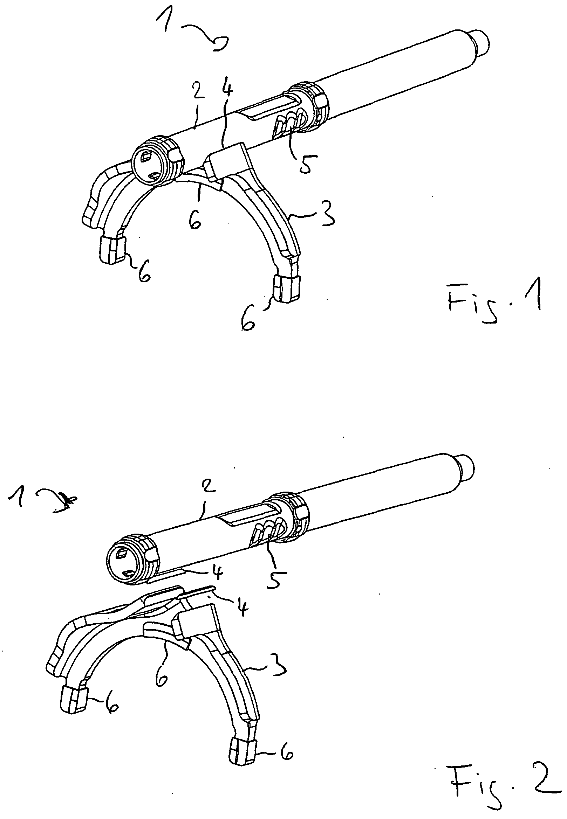

In der Figur 1 ist ein erfindungsgemässes Schaltgestänge 1 gezeigt, das ein Schaltrohr 2 und eine Schaltgabel 3 umfasst. Die Schaltgabel 3 ist mit zwei lasergeschweißten Schweißnähten 4 (in der Figur ist lediglich eine Schweißnaht 4 gezeigt) mit dem Schaltrohr 2 verbunden.

Das Schaltrohr 2 weist ausserdem Rastierkonturen 5 auf, die durch Rundkneten in das Schaltrohr 2 eingearbeitet sind. Durch Einarbeiten der Rastierkonturen 5 mit einem Rundknetverfahren kann die Wandstärke des Schaltrohres 2 auf 1,5 mm begrenzt werden. In Verbindung mit der unmittelbaren Verschweißung der Schaltgabel 3 mit dem Schaltrohr 2 ergibt sich dadurch eine deutliche Gewichtsersparnis gegenüber herkömmlichen Schaltgestängen. Zu erwähnen ist noch, dass an der Schaltgabel 3 Kunststoff-Pads 6 angeordnet sind, welche zur Anlage an andere Getriebeteile dienen.

In der Figur 2 ist das erfindungsgemässe Schaltgestänge der Figur 1 nochmal in einer perspektivischen, schematischen Explosions-Ansicht gezeigt. Dabei werden für die Figur 2 dieselben Bezugszeichen für dieselben Teile wie in der Figur 1 verwendet. Zur Beschreibung der Figur 2 wird ebenfalls auf die Figur 1 verwiesen.

In der Figur 2 sind allerdings die Schweißnähte 4 explizit dargestellt, wobei ausdrücklich darauf hinzuweisen ist, dass die Figur 2 eine sehr schematisierte Darstellung ist. Selbstverständlich müssen die Schweißnähte 4 nicht die Form wie in der Figur 2 gezeigt aufweisen.

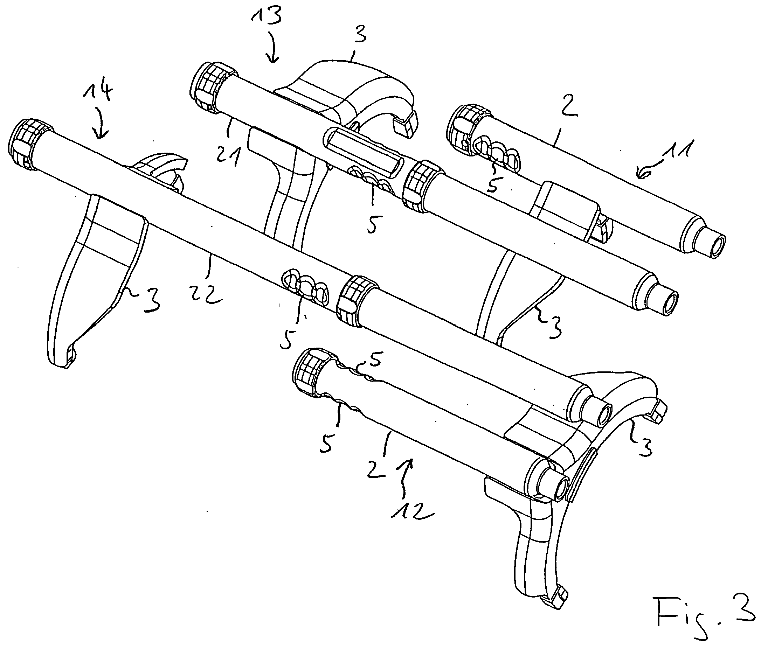

Die Figur 3 zeigt eine erfindungsgemässe Getriebebetätigungsvorrichtung für ein Doppelkupplungsgetriebe mit vier unterschiedlich ausgebildeten Schaltgestängen 11, 12, 13 und 14. Diese sind dazu vorgesehen, mit einem Gangstellerkolben verbunden zu werden. Beachtenswert ist, dass die Schaltgestänge 11 und 12 jeweils identische Schaltrohre 2 aufweisen, an denen identische Schaltgabeln 3 angeschweißt sind. Allerdings sind die Schaltgabeln 3 an den Schaltrohren 2 der Schaltgestänge 11 und 12 an verschiedenen Stellen angeschweißt. Auf diese Weise wird erreicht, dass mit identischen Bauteilen Schaltrohre 2 und Schaltgabeln 3 verschiedene Schaltgestänge einer Getriebebetätigungsvorrichtung hergestellt werden. Dies vereinfacht den Herstellprozess.

Die Schaltgestänge 12 und 14 weisen unterschiedliche Schaltrohre 21 und 22 auf, an denen jedoch wiederum die identischen Schaltgabeln 3 angeschweißt sind. Auf diese Weise werden die Produktionskosten weiter minimiert. Die Getriebebetätigungsvorrichtung der Figur 3 ist besonders leicht und einfach und kostengünstig herzustellen.

In den dargestellten bevorzugten Ausführungsbeispielen sind die Schaltgabeln nicht aus Draht geformt. Typische Ausführungsformen weisen Schaltgabeln aus Draht auf, die besonders leicht sind, so dass sich in Verbindung mit geringer Wandstärkung und Laserschweißung besondere Gewichtsvorteile ergeben.

## Patentansprüche

1. Schaltgestänge (1, 11 - 14), insbesondere für eine Kraftfahrzeug-Schaltung, mit
- einer Schaltgabel (3) und
- einem Schaltrohr (2, 21, 22),
**dadurch gekennzeichnet, dass**
das Schaltrohr (2, 21, 22) mit der aus Draht geformten Schaltgabel verschweißt ist und das Schaltrohr (2, 21, 22) zumindest eine rundgeknetete Rastierkontur (5) aufweist. und die Schaltgabel (3) zumindest teilweise aus Blech, Guss oder Draht geformt ist.

2. Schaltgestänge nach Anspruch 1, **dadurch gekennzeichnet, dass** das Schaltrohr (2, 21, 22) eine Wandstärke von maximal 2,5 mm aufweist.

3. Schaltgestänge (1, 11 - 14) nach einem der vorhergehenden Ansprüche, **dadurch gekennzeichnet, dass** das Schaltrohr (2, 21, 22) eine Wandstärke von maximal 2,5 mm aufweist.

4. Getriebebetätigungsvorrichtung mit mindestens zwei Schaltgestängen (11 - 14) nach einem der Ansprüche 1 bis 3.

5. Getriebebetätigungsvorrichtung nach Anspruch 4, **dadurch gekennzeichnet, dass** die Schaltgabeln (3) der mindestens zwei Schaltgestänge (11 -13) identisch sind.

6. Getriebebetätigungsvorrichtung nach Anspruch 4 oder 5, **dadurch gekennzeichnet, dass** zumindest zwei Schaltgestänge (11, 12) identische Schaltrohre (2) aufweisen.

## Claims

1. A gearshift linkage (1, 11 - 14), in particular for a motor-vehicle gearshift mechanism, with
- a gearshift fork (3) and
- a gearshift tube (2, 21, 22), **characterised in that**
the gearshift tube (2, 21, 22) is welded to the gearshift fork, which is formed from wire, and the gearshift tube (2, 21, 22) has at least one rotary-swaged detent contour (5), and the gearshift fork (3) is formed at least partially of sheet metal, cast metal or wire.

2. A gearshift linkage according to Claim 1, **characterised in that** the gearshift tube (2, 21, 22) has a wall thickness of at most 2.5 mm.

3. A gearshift linkage (1, 11 - 14) according to one of the preceding claims, **characterised in that** the gearshift tube (2, 21, 22) has a wall thickness of at most 2.5 mm.

4. A gearbox control device with at least two gearshift linkages (11 - 14) according to one of Claims 1 to 3.

5. A gearbox control device according to Claim 4, **characterised in that** the gearshift forks (3) of the at least two gearshift linkages (11 - 13) are identical.

6. A gearbox control device according to Claim 4 or 5, **characterised in that** at least two gearshift linkages (11, 12) have identical gearshift tubes (2).

## Revendications

1. Timonerie de changement de vitesse (1, 11 à 14), en particulier pour un circuit de véhicule automobile, avec
- une fourche de changement de vitesse (3) et
- un tube de commutation (2, 21, 22),
**caractérisée par le fait que**
le tube de commutation (2, 21, 22) est soudé à la fourche de changement de vitesse formée à partir d'un fil et que le tube de changement de vitesse (2, 21, 22) présente au moins un contour d'encliquetage rétreint en rotatif (5), et que la fourche de changement de vitesse (3) est au moins partiellement réalisée en tôle, en fonte ou à partir d'un fil.

2. Timonerie de changement de vitesse selon la revendication 1, **caractérisée par le fait que** le tube de commutation (2, 21, 22) présente une épaisseur de paroi de maximum 2,5 mm.

3. Timonerie de changement de vitesse (1, 11 à 14) selon l'une des revendications précédentes, **caractérisée par le fait que** le tube de commutation (2, 21, 22) présente une épaisseur de paroi de maximum 2,5 mm.

4. Dispositif de commande de transmission avec au moins deux timoneries de changement de vitesse (11 à 14) selon l'une des revendications 1 à 3.

5. Dispositif de commande de transmission selon la revendication 4, **caractérisé par le fait que** les fourches de changement de vitesse (3) des au moins deux timoneries de changement de vitesse (11 à 13) sont identiques.

6. Dispositif de commande de transmission selon la revendication 4 ou 5, **caractérisé par le fait qu'**au moins deux timoneries de changement de vitesse (11, 12) présentent des tubes de commutation (2) identiques.
